# EUROPÄISCHE PATENTSCHRIFT

(11) **EP 1 015 166 B1**
(45) Veröffentlichungstag und Bekanntmachung des Hinweises auf die Patenterteilung: **25.06.2003**
(21) Anmeldenummer: 98954138.8
(22) Anmeldetag: 07.09.1998
(51) Int. Cl.: B23K 26/06, B23K 26/00

(54) **OPTISCHE VORRICHTUNG ZUM BOHREN MITTELS LASERSTRAHLS**
OPTICAL DEVICE FOR BORING USING A LASER BEAM
DISPOSITIF OPTIQUE POUR LE FORAGE A L'AIDE D'UN FAISCEAU LASER

(30) Priorität: 18.09.1997 DE 19741029
(43) Veröffentlichungstag der Anmeldung: 05.07.2000
(73) Patentinhaber: ROBERT BOSCH GMBH, 70442 Stuttgart (DE)
(72) Erfinder: KUEHNLE, Goetz, D-71282 Hemmingen (DE); STREIBL, Norbert, D-71229 Leonberg (DE)
(86) Internationale Anmeldenummer: DE9802639
(87) Internationale Veröffentlichungsnummer: WO99014010

(56) Entgegenhaltungen:
- WO-A-80/01419
- PATENT ABSTRACTS OF JAPAN vol. 095, no. 002, 31. März 1995 & JP 06 320296 A (HITACHI CONSTR MACH CO LTD), 22. November 1994

## Beschreibung

### Stand der Technik

Die Erfindung bezieht sich auf eine Optische Vorrichtung zum Bohren mittels Laserstrahls mit einer im Strahlengang angeordneten optischen Anordnung zum Führen des Laserstrahls auf einer kreisförmigen Schneidebahn und einer hinter der Anordnung positionierten, den Laserstrahl auf einem Werkstück fokussierenden Fokussieroptik.

Bei einer derartigen bekannten optischen Vorrichtung wird z. B. zum Bohren von Spritzlöchern an Einspritzdüsen ein Laserstrahl auf einer Kreisbahn mit einem gewünschten Radius, dem Trepanierradius, geführt, der im wesentlichen dem gewünschten Bohrlochradius entspricht. Durch Ändern der Richtung des Hauptstrahles kann der Einstichwinkel des Strahlwerkzeuges und damit die Konizität des Bohrloches variiert werden.

Um den gewünschten Trepanierradius und den Einstichwinkel einzustellen, sind verschiedene Vorrichtungen vorgeschlagen worden. Bei einer bekannten Vorrichtung ist eine exzentrisch rotierende Fokussierungslinse vorgesehen. Dabei ist der Einstichwinkel nicht getrennt variierbar. Schwierigkeiten bereiten auch die mechanische Unwucht sowie die Einstellung der Parameter im rotierenden System.

Weiterhin ist eine Vorrichtung mit einer exzentrisch rotierenden Fokussierungslinse und einer kippbaren planparallelen Platte bekannt, wobei der Einstichwinkel zusätzlich über die Kippung beeinflußbar ist. Die dabei erforderliche mitbewegte Mechanik ist aufwendig, und Abbildungsfehler sind schwer vermeidbar.

Eine weitere Vorrichtung diese Art weist eine rotierende, gekippte planparallele Platte sowie eine einstellbare Keilplatte vor einer feststehenden oder rotierenden Fokussierungslinse auf. Auch hierbei müssen die Parameter im rotierenden System eingestellt werden, und die Mechanik ist aufwendig sowie mit einer Unwucht behaftet.

Nach dem Oberbegriff des Anspruches 1 geht die Erfindung von einer optischen Vorrichtung zum Bohren mittels Laserstrahls aus, wie sie in der JP 06320296 (Druckschrift D2) angegeben ist. Bei dieser bekannten optischen Vorrichtung werden mehrere Baugruppen der optischen Anordnung, nämlich ein Dove-Prisma 241, ein Rotationskopf 270 sowie der Laserstrahl selbst mittels Antriebe gedreht, wobei die Drehungen des Prismas und des Rotationskopfes von dem gleichen Motor synchron zueinander bewirkt werden. Bei einem derartigen Aufbau ist es nicht einfach, die Justierung zur Einstellung der gewünschten Schneidparameter vorzunehmen und auch der Aufbau ist wegen der verschiedenen zu drehenden Elemente aufwendig.

Eine weitere Vorrichtung zum Führen eines Laserstrahls ist in der WO 80/01419 (Druckschrift D1) gezeigt. Diese Vorrichtung dient dazu, eine Strahlungsintensitätsverteilung auf einem Werkstück zeitlich zu mitteln, um z.B. eine Wärmebehandlung des Materials zu bewirken. Offenbar ist ein Schmelzen der Materialoberfläche nicht erwünscht, wie Seite 1, Zeilen 14 und 15 dieser Druckschrift zu entnehmen ist. Vom Aufbau her ist bei dieser optischen Vorrichtung ein mit einem Antrieb vollständig drehbares Gehäuse vorgesehen, in dem verstellbare optische Elemente angeordnet sind. Eine Strahlfokussierung ist nicht angegeben und für den dort vorgesehenen Zweck einer relativ großflächigen Oberflächenbehandlung wohl auch nicht erforderlich.

Hinsichtlich der Justierung ergeben sich ähnliche Schwierigkeiten wie bei dem Gegenstand nach Druckschrift D2, da auch hierbei die zu justierenden Elemente innerhalb der gedrehten optischen Anordnung positioniert sind.

Der Erfindung liegt die Aufgabe zugrunde, eine optische Vorrichtung der eingangs genannten Art bereit zu stellen, die vereinfachte und sehr genaue Einstellmöglichkeiten bietet, wobei auch der Aufbau einfach ist.

Diese Aufgabe wird mit den Merkmalen des neuen Anspruches 1 gelöst.

Erfindungsgemäß ist dabei vorgesehen, dass der Bildrotator getrennt von der übrigen optischen Anordnung mit dem Antrieb drehbar gekoppelt ist und durch diese getrennte Drehung des Bildrotators die Strahlführung auf der Schneidbahn erfolgt. Die Schneid-Parameter sind hingegen außerhalb des rotierenden Bildrotators einstellbar. Mit diesen Maßnahmen ergibt sich ein relativ einfacher Aufbau, da lediglich der Bildrotator drehend gelagert und mit dem Antrieb zu koppeln ist. Insbesondere ist die Einstellung der Parameter einfach, da diese außerhalb des rotierenden Bildrotators vorgenommen wird. Die erfindungsgemäßen Maßnahmen ergeben wichtige Vorteile.

Bei einem vorteilhaften Aufbau der Vorrichtung ist vorgesehen, daß die optische Anordnung einen Versetzer und/oder einen Verkipper aufweist und daß der Bildrotator als Prismen-, Spiegel- oder Anamorphotvorrichtung ausgebildet ist. Mit dem Versetzer und dem Verkipper lassen sich der Einstichwinkel bzw. der Trepanierradius einfach einstellen. Dabei kann der Aufbau in einfacher Weise dadurch verwirklicht sein, daß der Versetzer als kippbare planparallele Platte ausgebildet ist, daß der Verkipper als einstellbare Keilplatte, Kippspiegel oder verstellbare Linse ausgebildet ist und daß der Bildrotator als Dove-Prisma oder als Abbe-König-Prisma ausgebildet ist.

Ein möglichst kleiner Fokussierungsfleck läßt sich dadurch erzielen, daß der Fokussieroptik zur Strahlaufweitung ein Teleskop vorgeschaltet ist.

Der Aufbau wird weiterhin dadurch begünstigt, daß in Strahlrichtung der Versetzer, der Verkipper und der Bildrotator hintereinander angeordnet sind.

Eine automatische Fokuseinstellung wird bei einfachem Aufbau dadurch erreicht, daß eine Autofokuseinrichtung vorgesehen ist, bei der der Bildrotator in einem rückreflektierten Strahl als Bildderotator ausgenutzt ist und die Versetzung und Verkippung durch den Versetzer bzw. Verkipper rückgängig gemacht sind. Um Auskoppelverluste zu vermeiden, kann die Fokuseinstellung bei anderer Wellenlänge erfolgen.

Ein weiterer wesentlicher Vorteil der erfindungsgemäßen Maßnahmen ist eine verbesserte Rundheit der Bohrlöcher. Häufig weist nämlich der vom Laser erzeugte Schneidstrahl keine perfekte Rotationssymmetrie in seiner Intensitätsverteilung auf, z.B. aufgrund optischer Aberrationen oder durch Anschwingen mehrerer Lasermoden. Bei Trepanieroptiken ohne Bildrotator ändert sich während des Trepanierens die Orientierung der Fokus-Unsymmetrie relativ zur Schneidrichtung. Dies kann zu Rundheitsfehlern beim Bohrergebnis führen. Durch den Bildrotator dreht sich dagegen der unsymmetrische Fokus beim Schneiden mit, wodurch die Rundheit verbessert wird.

Die Erfindung wird nachfolgend anhand von Ausführungsbeispielen unter Bezugnahme auf die Zeichnung näher erläutert. Es zeigen:
- Fig. 1: eine optische Vorrichtung zum Bohren mittels Laserstrahls schematisch in seitlicher Ansicht und
- Fig. 2: ein weiteres Ausführungsbeispiel der optischen Vorrichtung in Seitenansicht, wobei zur Strahlaufweitung ein Teleskop vorgesehen ist.

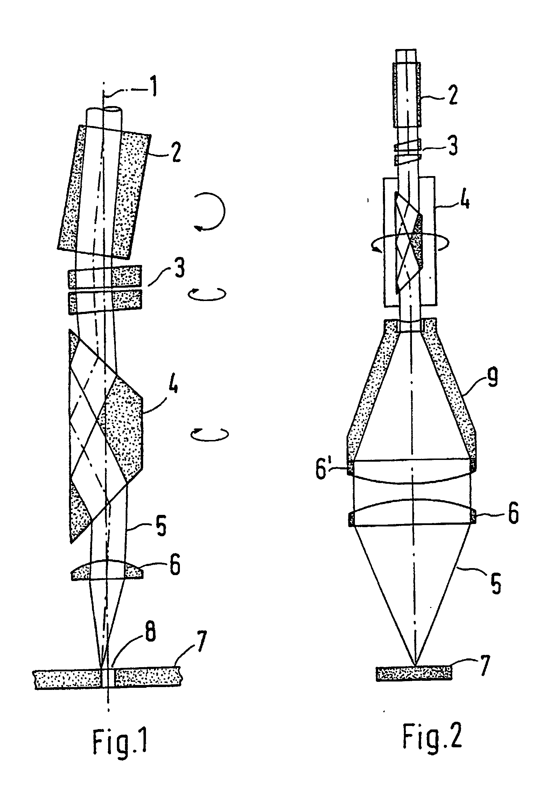

Gemäß der in Fig. 1 gezeigten Vorrichtung zum Bohren mittels Laserstrahls fällt im Bereich einer Drehachse 1 ein von einem nicht gezeigten Laser abgegebener, kollimierter Laserstrahl 5 auf einen Versetzer 2 in Form einer planparallelen Platte ein. Die beispielsweise zylinderförmige planparallele Platte 2 ist gegenüber dem einfallenden Laserstrahl 5 gekippt, so daß dieser parallel versetzt auf einen nachfolgenden Verkipper 3 fällt, der aus zwei gegeneinander um die optische Achse bzw. Drehachse 1 verdrehbaren Keilplatten besteht. Durch Verdrehen einer Keilplatte relaiv zu der anderen kann der Laserstrahl 5, wie aus Fig. 1 ersichtlich, gegenüber der Hauptachse geneigt werden und fällt anschließend auf die schräge Einfallsseite eines Bildrotators in Form eines Dove-Prismas 4, das in einer (nicht gezeigten) Halterung aufgenommen und um die Drehachse 1 drehbar gelagert ist. Der aus dem Bildrotator 4 austretende, gekippte Laserstrahl 5 fällt auf eine Fokussieroptik 6 in Form einer oder mehrerer Linsen und wird von dieser auf einem Werkstück 7 am Rande der auszuschneidenden Bohrung in Form des Trepanierlochs 8 fokussiert.

Bei dem Ausführungsbeispiel gemäß Fig. 2 ist die Fokussieroptik 6' als ein mehrelementiges optisches System ausgeführt. Als vorteilhafte Ausprägung dieses Systems ist dabei eine Vorrichtung zur Aufweitung des Laserstrahls 5 in Form eines Teleskops 9 vorgesehen, wodurch die Fokussierung des Laserstrahls 5 auf dem Werkstück 7 verbessert werden kann, sowie eine Anpassung des Strahldurchmessers auf die Linse 6 ermöglicht wird. Im übrigen entspricht der Aufbau demjenigen nach Fig. 1.

Mit dem gezeigten Aufbau werden die Funktionen der Strahlfokussierung, der Strahlführung auf einer kreisförmigen Schneidebahn, des Strahlversatzes zur Einstellung des Einstichwinkels sowie der Strahlkippung zum Einstellen des Trepanierradius getrennt einstellbar, wobei die Funktionen durch einzelne optische Baugruppen erzielt werden. Die gewünschten Parameter sind außerhalb des rotierenden Systems einstellbar, so daß die Handhabung vereinfacht und eine exakte Justierung ermöglicht wird. Insbesondere wird die Führung des Laserstrahls für die Trepanierbewegung allein durch den Bildrotator 4 bewirkt, so daß auch der mechanische Aufbau mit dem Antrieb einfach ist.

Mit der Fokussierungslinse 6 der Brennweite f wird der einfallende kollimierte Laserstrahl 5 Teilstrahlen in einem Punkt der Brennebene fokussiert, welcher sich auf oder in der Nähe der Oberfläche des Werkstücks 7 befindet. Ist der einfallende kollimierte Laserstrahl 5 relativ zur optischen Achse um einen kleinen Winkel verkippt, so ist der Brennpunkt innerhalb der Brennebene relativ zur optischen Achse um eine dem Trepanierradius entsprechende Strecke versetzt. Ist der auf die Fokussierlinse 6 fallende Laserstrahl 5 um eine Strecke zur optischen Achse parallel versetzt, so weicht der Einstichwinkel am Werkstück von der Normalen ab. Eine Verschiebung des Laserstrahls 5 vor der Fokussierlinse 6 führt somit zur Kippung des Laserstrahls 5 hinter der Fokussierlinse 6 und ermöglicht eine Änderung des Einstichwinkels. Hierzu ist die Apertur der Fokussierlinse 6 ausreichend groß zu dimensionieren. Eine Verkippung des Laserstrahls 5 vor der Fokussierlinse 6 führt zu einer Verschiebung des Brennpunkts und ermöglicht die Änderung des Trepanierradius. Hierzu ist das Feld, innerhalb dessen die Fokussierlinse 6 ausreichend korrigiert ist, ausreichend zu bemessen. Durch die einstellbare Verschiebung und Verkippung des Laserstrahls 5 vor der Fokussierlinse 6 können somit die Fokusposition (Trepanierradius) und die Kippung des Laserstrahls 5 (Einstichwinkel) hinter der Linse getrennt variiert werden. Ein kollimierter Laserstrahl 5 vor der Fokussierlinse 6 (bzw. Positionierung des Werkstückes in der Brennebene der Fokussierungslinse 8) ist vorteilhaft, weil dann Prismensysteme vor der Fokussierungslinse 6 keine Korrekturmaßnahmen für Abbildungsfehler erfordern. Andere (nichtkollimierte) Anordnungen sind natürlich denkbar.

An dem Bildrotator 4 erfolgt eine Spiegelung des einfallenden Laserstrahls 5 an einer gedachten Ebene im Prisma, die die Drehachse 1 enthält und parallel zur Basisfläche orientiert ist. Bei Drehung des Prismas 4 und feststehendem einfallendem Laserstrahl 5 dreht sich ein Austrittspunkt des Laserstrahls 5 an der Austrittsfläche des Prismas 4 mit der doppelten Drehgeschwindigkeit um die Drehachse 1.

Wird ein relativ zur Drehachse 1 versetzter bzw. verkippter kollimierter Laserstrahl 5 durch das Dove-Prisma 4 geschickt, so rotieren der Versatz und der Kippwinkel an der Austrittsfläche mit. Durch die Anordnung des Bildrotators in Form des Dove-Prismas 4 vor der Fokussierungslinse 6 wird deshalb eine Führung des Laserstrahls 5 auf dem Trepanierkreis mit geeignet mitrotierendem Einstichwinkel erzielt. Ein Prismensystem im kollimierten Laserstrahl führt keine zusätzlichen Abbildungsfehler ein.

Als alternative Ausführungsformen des Bildrotators 4 kommen eine reine Spiegelkombination mit ungerader Anzahl von Spiegelungen, komplexere Prismensysteme vorzugsweise in Geradsichtausführung (z. B. mit drei Spiegelungen), anamorphotische Abbildungssysteme/Teleskope (Realisierung einer Spiegelung durch Abbildungsmaßstäbe mit entgegengesetzten Vorzeichen, z. B. + 1 bzw. -1 in x- bzw. y-Richtung) in Betracht.

Zur Einstellung des Einstichwinkels wird vor der Fokussierungslinse 5 und dem Bildrotator 4 der Parallelversatz des kollimierten Laserstrahls 5 mittels des Versetzers 2 bewirkt, der am einfachsten als planparallele Platte ausgebildet ist. Bei normalem Lichteinfall auf die Platte 2 erfolgt kein Strahlversatz. Für kleine Kippwinkel der Platte wird der Versatz proportional zum Winkel und zur Plattendicke. Bei großen Winkeln ergibt sich ein komplizierterer trigonometrischer Zusammenhang. Bei geeigneter Auslegung läßt sich eine "optische Übersetzung" erzielen, wodurch eine sehr genaue Einstellung des Versatzes durch vergleichsweise grobe Winkeländerung möglich ist. Alternativ zu einer planparallelen Platte sind synchron kippbare Spiegel, ein Teleskop mit relativ zueinander beweglichen Linsen und dergleichen möglich.

Die Strahlkippung zur Einstellung des Trepanierradius kann mit dem Verkipper 3 auf einfache Weise mittels relativer Verdrehung der Keilplatten vorgenommen werden. Dadurch ist eine optische Übersetzung erzielbar. Als alternative Ausbildung des Verkippers 3 kommt z. B. ein Kippspiegel in Betracht.

Zur automatischen Einstellung des Fokus kann eine Autofokuseinrichtung vorgesehen werden, die eine Beobachtung des Fokus der Vorrichtung erfordert, wozu zur Vermeidung von Auskoppelverlusten eine andere Wellenlänge gewählt werden kann. Das von dem Werkstück 7 rückreflektierte Licht wird nach Rückgängigmachen der Bildrotation, des Versatzes und der Verkippung durch Umkehrung des Strahlenganges ausgkoppelt. Verfahren zur Detektion der Fokusqualität an sich sind Stand der Technik. Der Bildrotator 4 wird als Bildderotator verwendet.

Mit den beschriebenen Maßnahmen ergibt sich insbesondere eine Entkopplung der Trepanierbewegung von anderen Einstellparametern, wodurch die Einstellmöglichkeiten verbessert und der Aufbau vereinfacht werden.

## Patentansprüche

1. Optische Vorrichtung zum Bohren mittels Laserstrahls (5) mit einer im Strahlengang angeordneten, mit einem Antrieb gekoppelten und einen Bildrotator (4) aufweisenden optischen Anordnung zum Führen des Laserstrahls (5) auf einer kreisförmigen Schneidebahn entsprechend einstellbaren Parametern und einer hinter der Anordnung positionierten, den Laserstrahl (5) auf einem Werkstück (7) fokussierenden Fokussieroptik (6),
**dadurch gekennzeichnet**
**dass** der Bildrotator (4) getrennt drehbar mit dem Antrieb gekoppelt ist und dadurch die Strahlführung auf der Schneidebahn erfolgt, wobei die Parameter außerhalb des rotierenden Bildrotators (4) einstellbar sind.

2. Vorrichtung nach Anspruch 1,
**dadurch gekennzeichnet,**
**daß** die optische Anordnung einen Versetzer (2) und/oder einen Verkipper (3) aufweist und
**daß** der Bildrotator (4) als Prismen-, Spiegel- oder Anamorphotvorrichtung ausgebildet ist.

3. Vorrichtung nach Anspruch 2,
**dadurch gekennzeichnet,**
**daß** der Versetzer (2) als kippbare planparallele Platte ausgebildet ist, daß der Verkipper (3) als einstellbare Keilplatte, Kippspiegel oder verstellbare Linse ausgebildet ist und
**daß** der Bildrotator (4) als Dove-Prisma oder als Abbe-König-Prisma ausgebildet ist.

4. Vorrichtung nach einem der vorhergehenden Ansprüche,
**dadurch gekennzeichnet,**
**daß** der Fokussieroptik (6) zur Strahlaufweitung ein Teleskop (9) vorgeschaltet ist.

5. Vorrichtung nach einem der Ansprüche 2 bis 4,
**dadurch gekennzeichnet,**
**daß** in Strahlrichtung der Versetzer (2), der Verkipper (3) und der Bildrotator (4) hintereinander angeordnet sind.

6. Vorrichtung nach einem der vorhergehenden Ansprüche,
**dadurch gekennzeichnet,**
**daß** eine Autofokuseinrichtung vorgesehen ist, bei der der Bildrotator (4) in einem rückreflektierten Strahl als Bildderotator ausgenutzt ist und die Versetzung und Verkippung durch den Versetzer (2) bzw. Verkipper (3) rückgängig gemacht sind.

## Claims

1. Optical device for drilling by means of a laser beam (5), having an optical arrangement, arranged in the beam path, coupled to a drive and having an image rotator (4), for guiding the laser beam (5) on a circular cutting track in accordance with settable parameters, and having a focusing optical system (6) positioned downstream of the arrangement and focusing the laser beam (5) on a workpiece (7), **characterized in that** the image rotator (4) can be coupled to the drive in a separately rotatable fashion and the beam is thereby guided on the cutting track, the parameters being settable outside the image rotator (4).

2. Device according to Claim 1, **characterized in that** the optical arrangement has an offsetter (2) and/or a tilter (3), and **in that** the image rotator (4) is constructed as a prismatic, reflective or anamorphotic device.

3. Device according to Claim 2, **characterized in that** the offsetter (2) is constructed as a tiltable plane parallel plate, **in that** the tilter (3) is constructed as a settable wedge plate, tilting mirror or adjustable lens, and **in that** the image rotator (4) is constructed as a Dove prism or as an Abbe-König prism.

4. Device according to one of the preceding claims, **characterized in that** a telescope (9) is connected upstream of the focusing optical system (6) for the purpose of beam expansion.

5. Device according to one of Claims 2 to 4, **characterized in that** the tilter (3) and the image rotator (4) are arranged one behind another in the beam direction of the offsetter (2).

6. Device according to one of the preceding claims, **characterized in that** an autofocusing device is provided in the case of which the image rotator (4) is utilized in a retroreflected beam as image derotator, and the offsetting and tilting are cancelled by the offsetter (2) and tilter (3), respectively.

## Revendications

1. Dispositif optique pour percer à l'aide d'un faisceau laser (5) comportant un montage optique placé dans le chemin du faisceau, couplé à un moyen d'entraînement et ayant un rotateur d'image (4) pour guider le faisceau laser (5) sur une trajectoire de découpe circulaire en fonction de paramètres réglables et une optique de focalisation (6) placée derrière le montage et destinée à focaliser le faisceau laser (5) sur une pièce (7),
**caractérisé en ce que**
le rotateur d'image (4) est séparément couplé en rotation au moyen d'entraînement, et on guide ainsi le faisceau sur la trajectoire de découpe de sorte que les paramètres sont réglables indépendamment du rotateur d'image rotatif (4).

2. Dispositif selon la revendication 1,
**caractérisé en ce que**
le montage optique comporte un organe de décalage (2) et/ou un organe de basculement (3), et le rotateur d'image (4) est réalisé sous la forme d'un dispositif à prismes, à miroirs ou d'un dispositif d'anamorphose.

3. Dispositif selon la revendication 2,
**caractérisé en ce que**
l'organe de décalage (2) est réalisé sous la forme d'une plaque plane parallèle basculante, l'organe de basculement (3) est réalisé comme plaque en forme de coin réglable, sous forme de miroirs basculants ou lentilles réglables, et
le rotateur d'image (4) est un prisme Dove ou un prisme Abbe-Kônig.

4. Dispositif selon l'une quelconque des revendications précédentes,
**caractérisé par**
un télescope (9) en amont de l'optique de focalisation (6) pour élargir le faisceau.

5. Dispositif selon l'une quelconque des revendications 2 à 4,
**caractérisé en ce que**
l'organe de décalage (2), l'organe de basculement (3) et le rotateur d'image (4) sont installés l'un derrière l'autre dans la direction du faisceau.

6. Dispositif selon l'une quelconque des revendications précédentes,
**caractérisé par**
une installation d'autofocalisation qui utilise le rotateur d'image (4) comme rotateur inverse pour le rayon réfléchi, et qui neutralise le décalage et le basculement par l'organe de décalage (2) ou par l'organe de basculement (3).
